# EUROPEAN PATENT APPLICATION

(11) **EP 4 299 318 A1**
(43) Date of publication of application: **03.01.2024**
(21) Application number: 22784362.0
(22) Date of filing: 22.02.2022
(51) Int. Cl.: B41C 1/10, B41C 1/12, B41C 1/18, B41M 1/02, B41M 1/08, G06T 1/00, H04N 1/405, H04N 1/52

(54) **PLATEMAKING METHOD, PLATEMAKING SYSTEM, AND CAN BODY**

(30) Priority: 07.04.2021 JP 2021065370
(71) Applicant: Toyo Seikan Co., Ltd., Tokyo 141-8640 (JP)
(72) Inventor: SAITO, Yukiko, Yokohama-shi, Kanagawa 230-0001 (JP); NAGATSUKA, Ryota, Tokyo 141-8640 (JP); YAMAMOTO, Kenichiro, Yokohama-shi, Kanagawa 230-0001 (JP)
(74) Representative: Canzler & Bergmeier Patentanwälte Partnerschaft mbB
(86) International application number: PCT/JP2022/007322
(87) International publication number: WO 2022/215377

(57) **Abstract**

The purpose of the present invention is to make a printing plate that suppresses occurrence of moire while securing a wide color range only with a process color and that is able to suppress turbidity of ink. Provided is a platemaking method for making a printing plate that can express a color by overprinting dots of at least three colors among a plurality of process colors, wherein overprinting of two colors among the at least three colors is performed in a knockout process in which a void dot is formed in one of the two colors and a dot of the other color is overprinted at a position of the one color, overprinting of the remaining color among the at least three colors and the two colors is performed by a mixing process in which at least a part of a dot of the remaining color is put on the dot of the one color and/or the dot of the other color, and the remaining color includes at least white.

## Description

### Technical field

The present invention relates to a plate-making method, a plate-making system, and a can body.

### Background art

Printing plates attached to a printer for multicolor printing are manufactured to be able to represent colors by overprinting a plurality of process colors (for example, Patent Literature 1).

Patent Literature 1 describes a plate-making method for manufacturing a printing plate for each of colors based on image data subjected to image shrinkage, including: forming halftone dots of image data in basic four colors after color separation; changing the colors of the image data to seven colors which do not overlap each other; applying the image shrinkage to the image data in the changed seven colors to prevent the bleeding of inks or restrain the inks from being mixed and murky due to the mechanical displacement of the printer.

### Citation list

### Patent Literature

PTL1: Japanese Examined Patent Application Publication No. H7-57543

### Summary of Invention

### Problem to be solved by the invention

With the technology described in Patent Literature 1, the image shrinkage is applied to the image data representing halftone dots, and therefore the base color tends to be exposed, and the color gamut which is a region of reproducible colors tends to be limited. With the technology described in Patent Literature 1, however, when the image shrinkage is not applied in order to secure a wide color gamut, the inks tends to be mixed and murky. In addition, with the technology described in Patent Literature 1, when the image shrinkage is not applied to the image data representing halftone dots, moire tends to occur because the halftone dots in the seven colors overlap each other.

The present invention has been achieved considering the above-described circumstances to address the above-described problems. It is therefore an aspect of the object of the invention to manufacture printing plates capable of securing a wide color gamut only by process colors, restraining the occurrence of moire, and restraining inks from being mixed and murky. In addition, an aspect of the object of the invention is to provide a can body printed by a technique capable of securing a wide color gamut only by process colors, restraining the occurrence of moire, and restraining inks from being mixed and murky.

### Solution to Problem

An aspect of the invention provides a plate-making method for manufacturing printing plates capable of representing colors by overprinting halftone dots in at least three colors of a plurality of process colors. The plate-making method includes: overprinting two colors of the at least three colors by a knockout method in which knockouts of halftone dots in one color of the two colors are formed, and halftone dots in the other color are overprinted onto positions of the knockouts; and overprinting a remaining color of the at least three colors onto the two colors by an overprint method in which at least part of halftone dots in the remaining color is put on the halftone dots in the one color and/or the halftone dots in the other color. The remaining color includes at least white.

### Effect of the invention

According to the invention, it is possible to manufacture printing plates capable of securing a wide color gamut only by process colors, restraining the occurrence of moire, and restraining inks from being mixed and murky. In addition, according to the invention, it is possible to provide a can body printed by a technique capable of securing a wide color gamut only by process colors, restraining the occurrence of moire, and restraining inks from being mixed and murky.

### Brief Description of Drawings

Fig. 1 illustrates the configuration of a plate-making system according to an embodiment;
Fig. 2 illustrates color separation using a hue circle;
Fig. 3 illustrates a first color group and a second color group of the ranges of color components extracted by the color separation using the hue circle;
Fig. 4 illustrates an example of overprinting knockouts in white W and black K onto knockouts in two colors extracted by the color separation using the hue circle;
Fig. 5 illustrates an example of overprinting knockouts in white W and black K onto knockouts in two colors extracted by the color separation using the hue circle;
Fig. 6 illustrates an example of a printed material when offset printing is performed by using printing plates manufactured by a plate-making method according to an embodiment; and
Fig. 7 is a flowchart illustrating a process of the plate-making method for manufacturing printing plates by using the plate-making system illustrated in Fig. 1.

### Description of Embodiments

Hereinafter, embodiments of the invention will be described with reference to the drawings. The embodiments described later illustrate some examples of the invention, but do not limit the subject matter of the invention. In addition, all the configurations and the operations described in the embodiments are not necessarily essential as the configurations and the operations of the invention.

### <Configuration of Plate-making system>

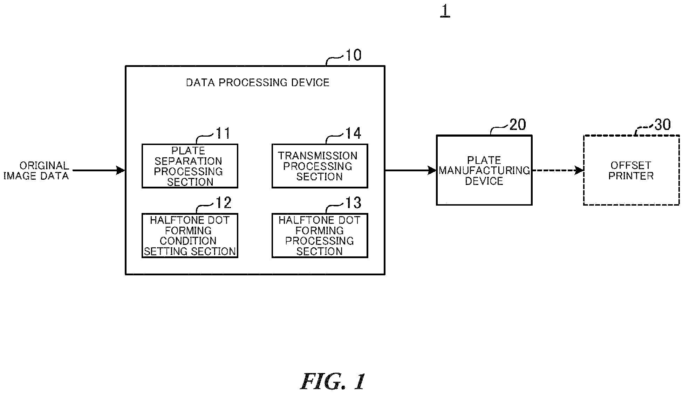

Fig. 1 illustrates the configuration of a plate-making system 1 according to the present embodiment.

The plate-making system 1 is a system configured to manufacture printing plates attached to a plate-type printer. The plate-making system 1 is a system adopting DTP (Desktop Publishing) and CTP (Computer To Plate). The plate-making system 1 is a system configured to manufacture printing plates for multicolor printing.

A printed material for the printing plates manufactured by the plate-making system 1 is a can body such as a two-piece can having an approximately cylindrical shape (including an unfinished can body), or a flat metal plate. In addition, the plate-making system 1 is a system configured to manufacture printing plates attached to an offset printer configured to transfer inks via an intermediate transfer member (e.g. a blanket), or a non-offset printer configured not to use the intermediate transfer member.

Fig. 1 illustrates the plate-making system 1 configured to manufacture printing plates attached to an offset printer 30 configured to transfer inks to the outer circumferential surface of a printed material via the intermediate transfer member. The printed material is a two-piece can and so forth having an approximately cylindrical shape. It is preferred that the printing plate manufactured by the plate-making system 1 illustrated in Fig. 1 is a waterless planographic plate not using dampening water and having non-image areas without ink which are formed by a silicone resin layer. Alternatively, the printing plate manufactured by the plate-making system 1 illustrated in Fig. 1 may be a resin letterpress plate having image areas with ink which are formed by a photosensitive resin layer.

The plate-making system 1 includes a data processing device 10 configured to create image data for plate-making by applying various image processing to original image data, and a plate manufacturing device 20 configured to manufacture printing plates based on the image data for plate-making.

The data processing device 10 is configured to edit, for example, modify the layout and the color tone of the original image data described by the page-description language. Then, the data processing device 10 creates the image data for plate-making by performing plate separation processing such as the color separation, and performing halftone dot forming processing to represent the shading of each of the colors by aggregation of halftone dots, and transmits the image data to the plate manufacturing device 20. The data processing device 10 includes a processor, a memory, and a program implementing the function of the data processing device 10.

The data processing device 10 includes a plate separation processing section 11 configured to perform plate separation processing, a halftone dot forming condition setting section 12 configured to set the conditions of the halftone dot forming processing, a halftone dot forming processing section 13 configured to perform the halftone dot forming processing, and a transmission processing section 14 configured to perform transmission processing to transmit data to the plate manufacturing device 20.

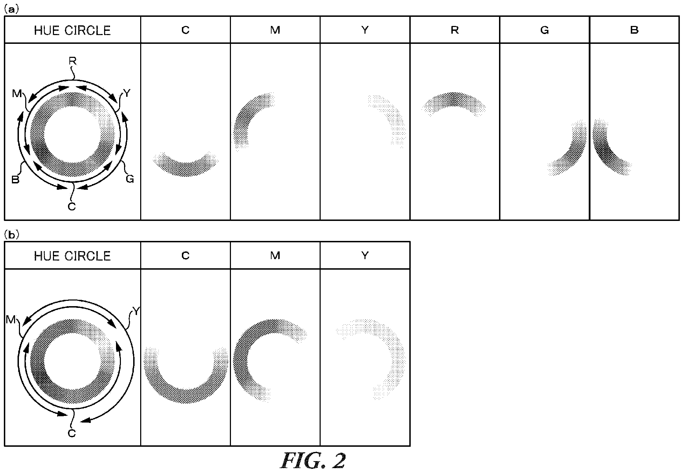

The plate separation processing section 11 separates the colors of the edited original image data into each of the process colors, and creates plate separation image data which is image data for each of the colors extracted by the color separation. With the present embodiment, the process colors are eight ink colors used for printing, for example, cyan C, magenta M, yellow Y, red R, green G, blue B, white W, and black K. Details of the color separation will be described later with reference to Fig. 2 to Fig. 5.

The halftone dot forming condition setting section 12 sets halftone dot forming conditions to form halftone dots of the plate separation image data created by the plate separation processing section 11. The halftone dot forming conditions are set to the plate separation image data for each of the colors. The halftone dot forming conditions include the halftone dot shape, the halftone dot area ratio, the number of screen lines, and the screen angle for each of the colors, as well as the condition for the knockout method and the overprint method.

The plate-making system 1 manufactures printing plates capable of representing colors other than the process colors extracted by the color separation, by overprinting the inks in the process colors extracted by the color separation. In this case, by performing the color separation by a technique described later with reference to Fig. 2 to Fig. 5, the plate-making system 1 can manufacture printing plates capable of representing an intended target color by overprinting at least three colors of the process colors extracted by the color separation.

When the target color is represented by overprinting at least three colors of the process colors extracted by the color separation, the plate-making system 1 manufactures printing plates capable of overprinting two of the at least three colors by the knockout method, and overprinting the remaining one by the overprint method.

The knockout method is a technique to form knockouts in the halftone dots in one of the two colors to be overprinted, and overprint halftone dots in the other color onto the positions of the knockouts. With the knockout method, the ink in one color and the ink in the other color are overpainted without contacting one another as much as possible.

With the overprint method, no knockout is formed for the halftone dots in both of the two colors to be overprinted. With the overprint method, at least part of the halftone dots in one of the two colors to be overprinted is put on the halftone dots in the other color, and therefore the ink in one color and the ink in the other color contact one another, and are overprinted.

The halftone dot forming condition setting section 12 designates plate separation image data in two of at least three colors, which are targeted for the knockout method, and plate separation image data in the remaining color targeted for the overprint method. Then, the halftone dot forming condition setting section 12 sets the halftone dot shape, the halftone dot area ratio, the number of screen lines, and the screen angle for each of the pixels of the designated plate separation image data, as well as the conditions for the knockout method and the overprint method. The shape of a halftone dot is not limited to a circle, but may be a polygon or others. Here, the halftone dot area ratio is the ratio of the halftone dot area to the unit area, and indicates the degree of the shading of the color.

To set the halftone dot area ratio of each of one color and the other color targeted for the knockout method, the halftone dot forming condition setting section 12 sets the halftone dot area ratio, based on the sum of the halftone dot area ratio of one color and the halftone dot area ratio of the other color. To be more specific, for each of the pixels, when the sum of the halftone dot area ratio of one color and the halftone dot area ratio of the other color is smaller than 100 %, the halftone dot forming condition setting section 12 sets the conditions such that the gap from the knockout in the halftone dot in one color is formed around the halftone dot in the other color. Moreover, the halftone dot forming condition setting section 12 sets the halftone dots in remaining one of at least three colors, and sets conditions, such as the halftone dot shape, the halftone dot area ratio, the number of screen lines, and the screen angle for the remaining color, as well as the conditions for the knockout method and the overprint method. Here, the remaining color includes at least the white W. That is, the remaining color is the white W, or the color constituted by the white as one color and the black K as the other color overprinted by the knockout method.

The halftone dot forming processing section 13 forms halftone dots of the plate separation image data created by the plate separation processing section 11, based on the halftone dot forming conditions set by the halftone dot forming condition setting section 12. The image data representing the halftone dots is binary data such as 1 bit TIFF (Tagged Image File Format). The image data representing the halftone dots is used as image data for plate-making when the plate manufacturing device 20 manufactures printing plates. The halftone dot forming processing section 13 may be configured as a software RIP (Raster Image Processor).

The halftone dot forming processing section 13 forms halftone dots of the plate separation image data for each of the two colors of at least three colors, which are targeted for the knockout method, on the conditions different from one another. To be more specific, to form halftone dots of the plate separation image data in one of the two colors, the halftone dot forming processing section 13 creates reverse image data once by reversing the shading of the one color, and forms halftone dots of the created reverse image data on the negative condition. On the negative condition, for each of the pixels, the lower the density of the color is, the higher the halftone dot area ratio is. On the other hand, to form halftone dots of the plate separation image data in the other color, the halftone dot forming processing section 13 forms halftone dots of the plate separation image data in the other color as is on the positive condition. On the positive condition, for each of the pixels, the higher the density of the color is, the higher the halftone dot area ratio is.

The transmission processing section 14 performs processing to transmit the image data representing the halftone dots formed by the halftone dot forming processing section 13 to the plate manufacturing device 20 as image data for plate-making.

The plate manufacturing device 20 manufactures a printing plate for each of the colors based on the image data transmitted from the transmission processing section 14 of the data processing device 10, that is, the image data representing the halftone dots for each of the colors. It is preferred that the plate manufacturing device 20 is a device configured to manufacture the waterless planographic plate described above. The plate manufacturing device 20 can manufacture a printing plate by exposing a silicone resin layer to the laser based on the image data representing the halftone dots for each of the colors, peeling the cured silicone resin layer, and develops the plate to form the image areas and the non-image areas.

### <Color separation, Knockout method and Overprint method>

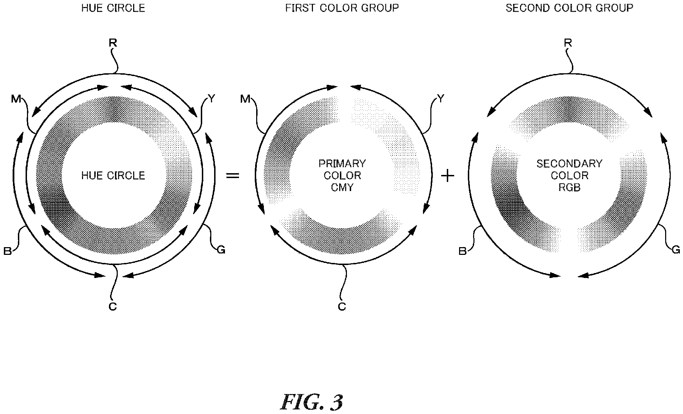

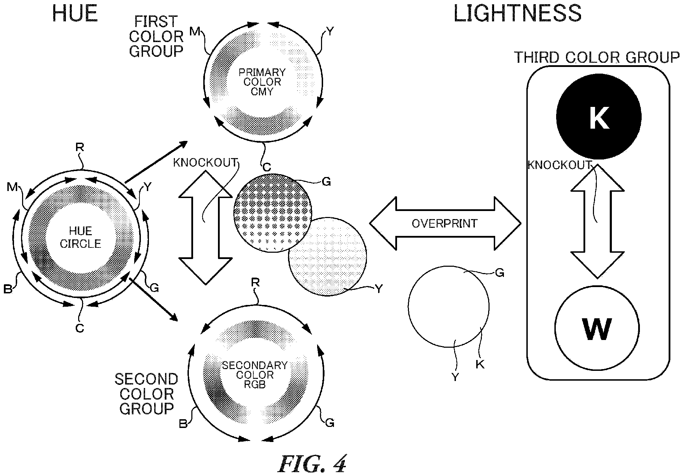

Fig. 2 illustrates color separation using a hue circle. Fig. 3 illustrates ranges of color components extracted by the color separation using the hue circle, which are grouped into a first color group and a second color group. Fig. 4 illustrates an example where two colors extracted by the color separation using the hue circle are overprinted by the knockout method and the overprint method.

For the color separation of the original image data, the plate separation processing section 11 performs the color separation separately between lightness components and hue components. To be more specific, the plate separation processing section 11 extracts the lightness component as the black K by GCR (gray component replacement), and extracts the hue components as the cyan C, the magenta M, the yellow Y, the red R, the green G, or the blue B by the color separation using the hue circle. In addition, provided that the upper limit of the total sum of the color components other than white W is 100 %, the shortfall to 100 % is extracted as the white W as a lightness component.

The color separation using the hue circle is a technique to separate the hue components of the target color into the cyan C, the magenta M, the yellow Y, the red R, the green G, and the blue B in a balanced manner based on the hue circle, and extract them. With the color separation using the hue circle, the hue components of the target color are represented by the cyan C, the magenta M, and the yellow Y, and a color mixture of the magenta M and the yellow Y is substituted for the red R, a color mixture of the yellow Y and the cyan C is substituted for the green G, and a color mixture of the cyan C and the magenta M is substituted for the blue B.

With the color separation using the hue circle, the hue components of the target color are separated in a balanced manner by using the cyan C, the magenta M and the yellow Y which are the three primary colors of subtractive color mixture, and the red R, the green G, and the blue B which are the three primary colors of additive color mixture, and therefore it is possible to reproduce all the colors represented by the hue circle in principle, and secure a wide color gamut. Therefore, with the embodiment, the process colors are eight colors including the white W and the black K, in addition to six colors, the cyan C, the magenta M, the yellow Y, the red R, the green G, and the blue B, and they are overprinted to represent colors other than the process colors.

Fig. 2(a) illustrates the range of each of the components, the cyan C, the magenta M, the yellow Y, the red R, the green G, and the blue B extracted by the color separation using the hue circle. Fig. 2(b) illustrates the range of each of the components, the cyan C, the magenta M, and the yellow Y extracted by the color separation using the hue circle divided only into the cyan C, the magenta M, and the yellow Y.

As compared between Fig. 2(a) and Fig. 2(b), it is seen that the range of each of the components extracted by the color separation using the hue circle is narrower than when the hue circle is divided only into the cyan C, the magenta M, and the yellow Y. In this way, the hue components are separated using the hue circle, and by this means, when two colors other than the white W and the black K are overprinted onto one another by the overprint method, it is possible to reduce the area of the overlapping part of one and the other of the two colors. Consequently, by separating the hue components using the hue circle, it is possible to secure a wide color gamut and restrain the inks in colors other than the black K from being mixed and murky.

Here, with the embodiment, among the six colors extracted by separating the hue components using the hue circle, a color group of the cyan C, the magenta M, and the yellow Y which are the three primary colors of subtractive color mixture is defined as a first color group, and a color group of the red R, the green G, and the blue B which are complementary colors of the first color group and the three primary colors of additive color mixture is defined as a second color group.

The range of each of the components, the cyan C, the magenta M, and the yellow Y constituting the first color group is spaced from each other and does not overlap each other as illustrated in Fig. 3. In the same way, the range of each of the components, the red R, the green G, and the blue B constituting the second color group is spaced from each other and does not overlap each other as illustrated in Fig. 3. That is, the first color group is constituted by the cyan C, the magenta M, and the yellow Y having the hue components not overlapping each other, and the second color group is constituted by the red R, the green G, and the blue B having the hue components not overlapping each other.

As described above, when two colors extracted by the color separation using the hue circle other than the white W and the black K are overprinted onto one another by the overprint method, it is possible to reduce the area of the overlapping part of the colors. However, in order to secure the color gamut, it is inevitable to overlap the colors to some extent, and the inks may be mixed and murky due to the overprinting. On the other hand, when the two colors are overprinted by the knockout method, the inks in the two colors do not contact one another as much as possible. In addition, when one color of the first color group and one color of the second color group are overprinted by the knockout method, the two colors with closer tones are overprinted in the knockout method than when two colors of the cyan C, the magenta M, and the yellow Y which are the three primary colors of subtractive color mixture are overprinted in the knockout method, and therefore the inks may not easily be mixed and murky even though the two colors contact one another.

Therefore, when the plate-making system 1 represents the hue components of the original image data by overprinting two colors extracted by the color separation using the hue circle other than the white W and the black K, the halftone dot forming condition setting section 12 sets the condition such that the two colors are overprinted by the knockout method. In particular, when one of the two colors belongs to the first color group, and the other belongs to the second color group, the halftone dot forming condition setting section 12 sets the condition such that the one color belonging to the first color group and the other belonging to the second color group are overprinted by the knockout method. By this means, the plate-making system 1 can manufacture printing plates capable of providing a wide color gamut and restraining the inks from being mixed and murky as much as possible.

In addition, when the halftone dot forming condition setting section 12 sets the halftone dot forming condition for the white W as the remaining color, it is understood that the white W is substantially extracted as the lightness component from the original image data. Therefore, the plate-making system 1 manufactures printing plates capable of representing the lightness components of the original image data by overprinting the white W onto the two colors representing the hue components.

With the plate-making system 1, the plate separation processing section 11 extracts the lightness components of the original image data as the black K by the GCR. Therefore, the color group representing the lightness components of the original image data includes at least the white W set by the halftone dot forming condition, and, for example, when the black K is extracted by the GCR, the color group is defined as a third color group including the black K.

With the plate-making system 1, to represent the lightness components of the original image data, the halftone dot forming condition setting section 12 sets the condition such that two colors (from the first and second color groups) representing the hue components are overprinted with the remaining color representing the lightness component, that is, one of the white W and the black K from the third color group, or the knockouts in the white W and the black K by the overprint method.

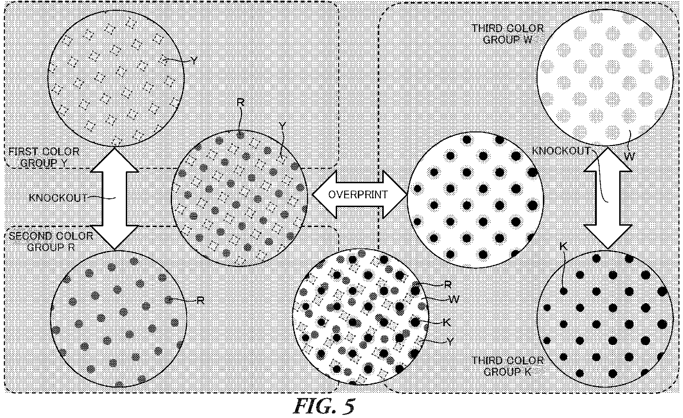

Fig. 4 and Fig. 5 illustrate an example of overprinting by the overprint method where the knockouts in the white W and the black K are overprinted onto the knockouts in any color belonging to the first color group (primary color) and any color belonging to the second color group (secondary color) which are extracted by the color separation using the hue circle.

Fig. 4 illustrates an example of overprinting where the yellow Y and the green G extracted by the color separation using the hue circle are overprinted by the knockout method, the white W and the black K are overprinted by the knockout method, and they are overlapped with one another. As illustrated in Fig. 4, a knockout is formed at each of the positions at which one of the yellow Y and green G is put on the other, and the halftone dots in the other of the yellow Y and the green G are located at each of the positions at which the knockout in one of the yellow Y and the green G is formed. The knockouts in the white W and the black K are overlapped with the knockouts in the yellow Y and the green G at screen angles shifted from each other. In this case, at least part of the halftone dots in the white W and the black K constituting the remaining color is put on the halftone dots in the yellow Y and the green G by the overprint method.

Fig. 5 illustrates an example of overprinting where the yellow Y and the red R extracted by the color separation using the hue circle are overprinted by the knockout method, the white W and the black K are overprinted by the knockout method, and they are overlapped with one another. As illustrated in Fig. 5, a knockout is formed at each of the positions at which one of the yellow Y and the red R is put on the other, and the halftone dots in the other of the yellow Y and the red R are located at each of the positions at which the knockout in one of the yellow Y and the red R is formed. Then, the knockouts in the white W and the black K are overlapped with the knockouts in the yellow Y and the red R at the screen angles shifted from each other. In this case, at least part of the halftone dots in the white W and the black K constituting the remaining color is put on the halftone dots in the yellow Y and the red R by the overprint method.

In this way, the knockouts in the white W and the black K are overprinted onto the knockouts in the colors of the first color group and the second color group (the yellow Y and the green G in Fig. 4 and the yellow Y and the red R in Fig. 5) by the overprint method. By this means, the screen angle and the number of screen lines of the halftone dots in the white W and the black K do not need to be equal to those of the halftone dots in two colors other than the white W and the black K, but can be freely set. In this case, the halftone dot forming condition setting section 12 sets the screen angle and the number of screen lines of the halftone dots in the white W and the black K to values that can restrain the occurrence of moire. In order to restrain the occurrence of moire, it is preferred that the screen angle of the halftone dots in the white W and the black K is different from the screen angles of the halftone dots in the two colors other than the white W and the black K which are overprinted by the knockout method.

In addition, the total halftone dot area ratio for overprinting the knockouts in the white W and the black K onto the knockouts in the colors of the first color group and the second color group (the yellow Y and the green G in Fig. 4 and the yellow Y and red R in Fig. 5) is set to be equal to or lower than 160 %. By this means, it is possible to restrain the inks from being mixed and murky.

In a case where the manufactured printing plates are used in an offset printer configured to transfer inks via the intermediate transfer member, when the inks in the colors other than the ink in the black K are put on the ink in the black K, the wetted ink in the black K is transferred to the printing plates for the colors other than the black K, and then may be mixed into ink reservoirs for the colors other than the black K from the printing plates via foam rollers and so forth. Then, the inks in the colors other than the black K are mixed with the ink in the black K and become murky to lower the color tones, and consequently may immediately become unavailable.

In contrast, when the ink in the black K is put on the inks in the colors other than the black K, even though wetted inks in the colors other than the black K are transferred to the printing plate for the black K and mixed into the ink reservoir, its color tone of the ink in the black K is not changed much, and therefore the ink in the black K may not immediately become unavailable. Therefore, this case where the ink in the black K is put on the inks in the colors other than the black K can more restrain the inks from becoming murky than the former case.

On the other hand, the white W is the color which the most easily becomes murky. Therefore, when the ink in the white W is put on the inks in colors other than the white W, the ink in the white W becomes mixed with the inks in the colors other than the white W, and its color tone is changed, and consequently the ink in the white W may immediately become unavailable.

Therefore, with the plate-making system 1, to represent the lightness components of the original image data, the halftone dot forming condition setting section 12 sets the condition such that the white W and the black K are overprinted onto the colors representing the hue components other than the white W and the black K by the overprint method, and the white W is first transferred to the intermediate transfer member. By this means, the plate-making system 1 can manufacture printing plates capable of restraining the occurrence of moire, restraining the inks in the colors other than the black K from being mixed with the black K and becoming murky, and also restraining the ink in the white W from being mixed with the inks in the colors other than the white W.

In this way, with the plate-making system 1, the plate separation processing section 11 separates the hue components of the original image data into the cyan C, the magenta M, the yellow Y, the red R, the green G, and the blue B by using the hue circle. Then, with the plate-making system 1, to represent the hue components of the original image data by overprinting two process colors other than the white W and the black K, the halftone dot forming condition setting section 12 sets the condition such that the two process colors are overprinted by the knockout method. Meanwhile, with the plate-making system 1, to represent the lightness components of the original image data, the halftone dot forming condition setting section 12 sets the condition such that the color including at least the white W representing the lightness components is overprinted onto the process colors representing the hue components other than the white W and the black K by the overprint method.

More specifically, the plate-making system 1 manufactures printing plates to represent predetermined colors by overprinting at least three colors of the process colors, that is, overprinting two colors representing the hue components of the original image data other than the white W and the black K with one of the white W and the black K representing the lightness components of the original image data, or the knockouts in the white W and the black K. Then, with the plate-making system 1, among at least three colors to be overprinted, two colors representing the hue components are overprinted onto one another by the knockout method, and then are overprinted with one of the white W and the black K which is the remaining one of the at least three colors, or the knockouts in the white W and the black K by the overprint method.

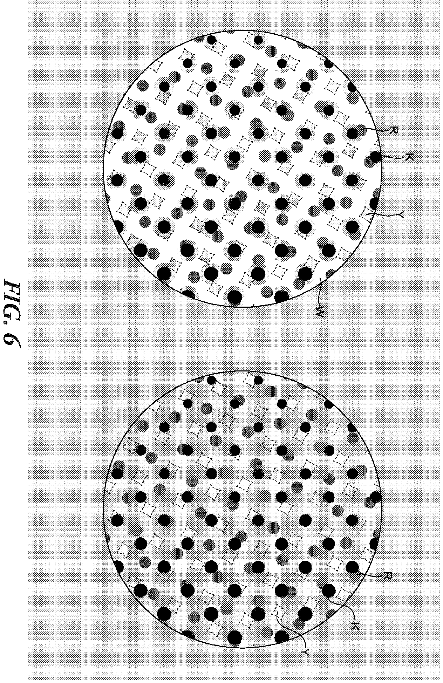

In the case where the manufactured printing plates are used in an offset printer configured to transfer inks via the intermediate transfer member, the white W is first transferred to the intermediate transfer member, and subsequently the colors are transferred to the intermediate transfer member in order from pale colors. The white W is printed on the top of the printed material. Here, the color appearance does not necessarily correspond to the order of transferring the colors, for example, a deep color on the lower layer is seen through the white W on the top layer. Fig. 6 illustrates an example of the printed material when the white W is used (left) and an example of the printed material when the white W is not used (right). As illustrated in Fig. 6, when the white W is used, the base color of the printed material is covered with the white W, and, on the other hand, when the white W is not used, the base color of the printed material is exposed. Therefore, it is preferred that the white W is printed when the base color is not white. Meanwhile, in a case where the printed material is a mirror material like metal, when colors representing the hue components are printed on the mirror material, the colors appear translucent colors. In this case, when the white W is overlapped, the colors appear opaque colors, and therefore it is possible to widen the gamut for color reproduction.

With the plate-making system 1, two colors representing the hue components of the original image data other than the white W and the black K are one of the cyan C, the magenta M, and the yellow Y belonging to the first color group, and one of the red R, the green G and the blue B belonging to the second color group. In addition, the lightness components of the original image data are represented by one of the white W and the black K belonging to the third color group, or the knockouts in the white W and the black K. By this means, the plate-making system 1 can manufacture printing plates capable of securing a wide color gamut only by the process colors, restraining the occurrence of moire, and restraining the inks from being mixed and murky. Here, when the hue components can be represented by one color, the color of the third color group may be overlapped with one of the color of the first color group and the color of the second color group.

### <Plate-making method by using Plate-making system>

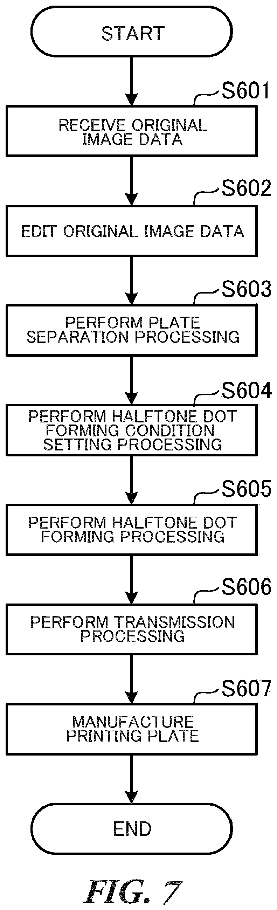

Fig. 7 is a flowchart illustrating a process of a plate-making method for manufacturing printing plates by using the plate-making system 1 illustrated in Fig. 1.

Step S601 to step S606 illustrated in Fig. 7 may be performed by the data processing device 10, based on operation commands inputted by a user via a user interface provided in the data processing device 10. Step S607 illustrated in Fig. 7 may be performed by the plate manufacturing device 20.

In the step S601, the plate-making system 1 receives original image data by the data processing device 10.

In the step S602, the plate-making system 1 edits the received original image data. The plate-making system 1 corrects the layout to match the printing area of a printed material, and modifies the color tone to edit the original image data.

In the step 603, the plate-making system 1 applies plate separation processing to the edited original image data. The plate-making system 1 separates the colors of the edited original image data into each of the process colors, and creates the plate separation image data for each of the colors.

In the step S604, the plate-making system 1 performs halftone dot forming condition setting processing to set the halftone dot forming conditions for forming halftone dots of the plate separation image data created by the plate separation processing. In particular, the plate-making system 1 designates the plate separation image data in each of one color and the other color targeted for the knockout method, and sets the halftone dot area ratio of each of the one color and the other color for each of the pixels of the designated plate separation image data. One color targeted for the knockout method is one of the cyan C, the magenta M, and the yellow Y belonging to the first color group, and the other is one of the red R, the green G, and the blue B belonging to the second color group. Moreover, the plate-making system 1 designates the plate separation image data in the color targeted for the overprint method, and sets the halftone dot area ratio, the number of screen lines, the screen angle and so forth. One of the white W and the black K, or the knockouts in the white W and black K are targeted for the overprint method.

In the step S605, the plate-making system 1 forms halftone dots of the plate separation image data created by the plate separation processing, based on the halftone dot forming conditions set by the halftone dot forming condition setting processing. In particular, when forming halftone dots of the plate separation image data in one color targeted for the knockout method, the plate-making system 1 creates reverse image data by reversing the shading of the one color, and forms halftone dots of the created reverse image data on the negative condition. Meanwhile, when forming halftone dots of the plate separation image data in the other color targeted for the knockout method, the plate-making system 1 forms halftone dots of the plate separation image data in the other color as is on the positive condition. Moreover, when forming halftone dots of the plate separation image data in the color targeted for the overprint method, the plate-making system 1 forms halftone dots of this plate separation image data as is on the positive condition.

In the step S606, the plate-making system 1 performs transmission processing to transmit the image data representing the halftone dots formed by the halftone dot forming processing, as the image data for plate-making, from the data processing device 10 to the plate manufacturing device 20.

In the step S607, the plate-making system 1 manufactures a printing plate for each of the colors by the plate manufacturing device 20, based on the image data transmitted by the transmission processing. The plate-making method illustrated in Fig. 7 ends at this step.

### <Operational advantage>

As described above, the plate-making system 1 according to the embodiment is a plate-making system configured to manufacture printing plates capable of representing colors by overprinting the halftone dots in at least three colors of the plurality of process colors. Then, with the plate-making system 1 according to the embodiment, two of the at least three colors are overprinted onto one another by the knockout method, and then are overprinted with the remaining one of the at least three colors by the overprint method. By this means, the plate-making system 1 can manufacture printing plates capable of securing a wide color gamut only by the process colors, restraining the occurrence of moire, and restraining the inks from being mixed and murky.

Moreover, with the plate-making system 1 according to the embodiment, one of the colors targeted for the knockout method belongs to the first color group constituted by the colors having the hue components which do not overlap each other, and the other targeted for the knockout method belongs to the second color group constituted by the colors having the hue components which do not overlap each other. That is, one color and the other color belong to the different color groups, and the ranges of the components may overlap each other. However, even though the ranges of the components overlap each another, the plate-making system 1 according to the embodiment can overprint the inks without contact of the inks as much as possible by the knockout method. Therefore, the plate-making system 1 according to the embodiment can manufacture printing plates capable of securing a wide color gamut only by the process colors, restraining the occurrence of moire, and restraining the inks from being mixed and murky.

Moreover, with the plate-making system 1 according to the embodiment, the plurality of process colors are eight colors, the cyan C, the magenta M, the yellow Y, the red R, the green G, the blue B, the white W, and the black K. Then, with the plate-making system 1 according to the embodiment, the first color group is constituted by the cyan C, the magenta M, and the yellow Y, the second color group is constituted by the red R, the green G, and the blue B, and the remaining one of the at least three colors includes the white W and the black K of the third group. That is, the first color group is constituted by the three primary colors of subtractive color mixture, and the second color group is constituted by the three primary colors of additive color mixture, and therefore the plate-making system 1 according to the embodiment can manufacture printing plates capable of extending the available color gamut only by the process colors.

In addition, with the plate-making system 1 according to the embodiment, one of the white W and the black K, or the knockouts in the white W and the black K are targeted for the overprint method, and the white W is first transferred to the intermediate transfer member. Therefore, it is possible to manufacture printing plates capable of restraining the inks in colors other than the black K from being mixed with the ink in the black K and becoming murky, and also restraining the ink in the white W from being mixed with the inks in colors other than the white W and becoming murky. Therefore, the plate-making system 1 according to the embodiment can manufacture printing plates capable of restraining the occurrence of moire, extending the available color gamut only by the process colors, and restraining the inks from being mixed and murky. Moreover the colors targeted for the overprint method include the white W, and therefore it is possible to truly reproduce the colors of the original image data without being affected by the base color of the printed material.

Moreover, with the plate-making system 1 according to the embodiment, the halftone dots in the above-described remaining one of at least the three colors are disposed at a screen angle different from those of the halftone dots in the two colors targeted for the knockout method. Therefore, even though the halftone dots in the remaining one of the at least three colors are overprinted by the overprint method, the plate-making system 1 according to the embodiment can restrain the occurrence of moire. Consequently, the plate-making system 1 according to the embodiment can manufacture printing plates capable of securing a wide color gamut only by the process colors, restraining the inks from being mixed and murky, and restraining the occurrence of moire.

Moreover, the plate-making system 1 according to the embodiment manufactures printing plates to print a two-piece can or a metal plate as a printed material. The printed surface of the two-piece can or the metal plate does not have ink permeability, and therefore, to restrain the inks from being mixed and murky while securing the color gamut only by the process colors is a greater challenge for the conventional printing plates than when the printed material is paper and so forth. Even though the printed material is a two-piece can or a metal plate, the plate-making system 1 according to the embodiment can manufacture printing plates capable of representing colors by overprinting the halftone dots in at least three colors of the plurality of process colors. Accordingly, even though the printed material is a two-piece can or a metal plate, the plate-making system 1 according to the embodiment can manufacture printing plates capable of securing a wide color gamut only by the process colors, restraining the occurrence of moire, and restraining the inks from being mixed and murky.

Furthermore, with the plate-making system 1 according to the embodiment, a can body is printed such that two of at least three colors are overprinted onto one another by the knockout method, and then are overprinted with the remaining one of the at least three colors by the overprint method. By this means, with the plate-making system 1 according to the embodiment, a can body can be printed so that a wide color gamut is secured only by the process colors, the inks is restrained from being mixed and murky, the occurrence of moire is restrained.

### <Another embodiment>

With the above-described embodiment, the process colors for the plate-making system 1 are the eight colors, the cyan C, the magenta M, the yellow Y, the red R, the green G, the blue B, the white W, and the black K. However, this is by no means limiting. For example, the process colors for the plate-making system 1 may be seven colors, the cyan C, the magenta M, the yellow Y, orange O, the green G, the white W, and the black K. In this case, the first color group may be constituted by the cyan C, the magenta M, and the yellow, and the second color group may be constituted by the orange 0 and the green G.

With the above-described embodiment, the plate-making system 1 is a system configured to manufacture printing plates to print a can body such as a two-piece can or a metal plate as a printed material. However, this is by no means limiting. The plate-making system 1 may be a system configured to manufacture printing plates to print a three-dimensional object such as a jar, a bottle, and a cup having an approximately cylindrical shape. Moreover, the plate-making system 1 may be a system configured to manufacture printing plates to print a flat object such as paper, a label, a film, and a sheet. Furthermore, the plate-making system 1 may be a system configured to manufacture printing plates to print nonmetallic material such as plastic and glass having a low permeability to ink.

### <Others>

The above-described embodiment including a modification may apply their features to each other. The above-described embodiment are not intended to limit the subject matter of the invention but may be modified to the extent not to depart from the scope of the claims.

The terms used in the above-described embodiment and the claims should be construed as non-exclusive terms. For example, the term "including" should be construed not to limit the subject described as being included. The term "containing" should be construed not to limit the subject described as being contained. The term "comprising" should be construed not to limit the subject described as being comprised. The term "having" should be construed not to limit the subject as being had.

### Reference Signs List

- 1: plate-making system
- 10: data processing device
- 11: plate separation processing section
- 12: halftone dot forming condition setting section
- 13: halftone dot forming processing section
- 14: transmission processing section
- 20: plate manufacturing device
- 30: offset printer
- B: blue
- C: cyan
- G: green
- K: black
- M: magenta
- R: red
- Y: yellow
- W: white

## Claims

1. A plate-making method for manufacturing printing plates capable of representing colors by overprinting halftone dots in at least three colors of a plurality of process colors, the plate-making method comprising:
overprinting two colors of the at least three colors by a knockout method in which knockouts of halftone dots in one color of the two colors are formed, and halftone dots in the other color are overprinted onto positions of the knockouts; and
overprinting a remaining color of the at least three colors onto the two colors by an overprint method in which at least part of halftone dots in the remaining color is put on the halftone dots in the one color and/or the halftone dots in the other color,
wherein the remaining color includes at least white.

2. The plate-making method according to claim 1, wherein the remaining color is constituted by white as one color and black as the other color overprinted by the knockout method.

3. The plate-making method according to claim 1, wherein:
the one color belongs to a first color group constituted by colors having hue components which do not overlap each other; and
the other color belongs to a second color group constituted by colors having hue components which do not overlap each other, the colors belonging to the second color group being different from the colors belonging to the first color group.

4. The plate-making method according to claim 3, wherein:
the first color group is constituted by cyan, magenta, and yellow; and
the second color group is constituted by red, green, and blue.

5. The plate-making method according to one of claims 1 to 4, wherein:
the printing plates are used in an offset system configured to transfer inks via an intermediate transfer member; and
a printing plate for the white is set such that the white is first transferred to the intermediate transfer member.

6. The plate-making method according to one of claims 1 to 5, wherein the halftone dots in the remaining color are disposed at a screen angle different from those of halftone dots in the two colors.

7. The plate-making method according to one of claims 1 to 6, wherein a printed material for the printing plates is a can body having an approximately cylindrical shape, or a metal plate.

8. A plate-making system for manufacturing printing plates capable of representing colors by overprinting halftone dots in at least three colors of a plurality of process colors, wherein:
two colors of the at least three colors are overprinted by a knockout method in which knockouts of halftone dots in one color are formed, and halftone dots in the other color are overprinted onto positions of the knockouts;
a remaining color of the at least three colors is overprinted onto the two colors by an overprint method in which at least part of halftone dots in the remaining color is put on the halftone dots in the one color and/or the halftones in the other color; and
the remaining color includes at least white.

9. A can body printed to represent colors by overprinting halftone dots in at least three colors of a plurality of process colors, wherein:
two colors of the at least three colors are overprinted by a knockout method in which knockouts of halftone dots in one color are formed, and halftone dots in the other color are overprinted onto positions of the knockouts;
a remaining color of the at least three colors is overprinted onto the two colors by an overprint method in which at least part of halftone dots in the remaining color is put on the halftone dots in the one color and/or the halftones in the other color; and
the remaining color includes at least white.
